# EUROPÄISCHE PATENTANMELDUNG

(11) **EP 3 381 959 A1**
(43) Veröffentlichungstag der Anmeldung: **03.10.2018**
(21) Anmeldenummer: 17162957.9
(22) Anmeldetag: 27.03.2017
(51) Int. Cl.: C08G 18/48, C08G 18/79, C08L 75/16, B33Y 70/00, C08G 18/81, C08G 18/24

(54) **DUAL CURE-VERFAHREN UNTER VERWENDUNG VON THERMISCH LATENTEN ZINNKATALYSATOREN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Ein Verfahren zur Herstellung eines Gegenstands aus einem Aufbaumaterial, wobei das Aufbaumaterial radikalisch vernetzbare Gruppen, NCO-Gruppen sowie Gruppen mit Zerewitinoffaktiven H-Atomen umfasst und der Gegenstand ein dreidimensionaler Gegenstand und/oder eine Schicht ist. Während und/oder nach der Herstellung des Gegenstands wird das Aufbaumaterial auf eine Temperatur von ≥ 50 °C erwärmt und das Aufbaumaterial umfasst eine oder mehrere zyklische Zinnverbindungen der Formel F-I, F-II und/oder F-III:

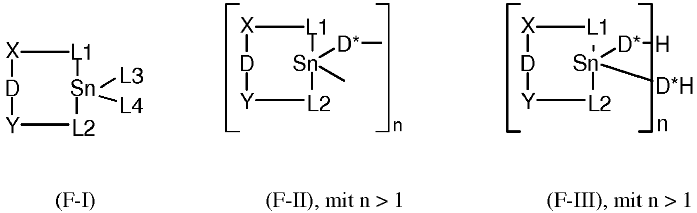

## Beschreibung

Die vorliegende Erfindung betrifft ein Verfahren zur Herstellung eines Gegenstands aus einem Aufbaumaterial, wobei das Aufbaumaterial radikalisch vernetzbare Gruppen, NCO-Gruppen sowie Gruppen mit Zerewitinoff-aktiven H-Atomen umfasst und der Gegenstand ein dreidimensionaler Gegenstand und/oder eine Schicht ist. Während und/oder nach der Herstellung des Gegenstands wird das Aufbaumaterial auf eine Temperatur von ≥ 50 °C erwärmt und das Aufbaumaterial umfasst eine oder mehrere spezielle Zinnverbindungen. Die Erfindung betrifft ebenfalls einen durch das erfindungsgemäße Verfahren hergestellten Gegenstand sowie die Verwendung spezieller Zinnverbindungen in additiven Fertigungsverfahren.

Beschichtungsmittel, die durch zwei unabhängige Prozesse aushärten, werden allgemein als Dual Cure-Systeme bezeichnet. Üblicherweise besitzen die enthaltenen Bindemittelkomponenten dabei unterschiedliche funktionelle Gruppen die unter geeigneten Bedingungen in der Regel unabhängig voneinander miteinander vernetzen. Übliche zum Stand der Technik gehörende Dual Cure-Systeme besitzen strahlen- sowie thermisch härtbare Gruppen, wobei besonders vorteilhafte Eigenschaften bei Verwendung von Isocyanat- und Hydroxygruppen als thermisch vernetzende Funktionen erhalten werden. Nachteilig an solchen Lösungen ist jedoch, dass die Reaktivität der NCO Gruppen und/oder die Anwesenheit von Katalysatoren für den zweiten Härtungsmechnismus die Topfzeit des Beschichtungsmittels begrenzt.

Eine Klasse von Dual Cure-Systemen enthält blockierte Isocyanate. Nach einer Deblockierung bei geeigneter Temperatur stehen die NCO-Gruppen für Reaktionen mit Polyolen zur Verfügung. Nachteilig bei der Verwendung von blockierten Isocyanaten sind die für blockierte Isocyanate typische hohe Viskosität und die üblicherweise sehr hohe Deblockierungstemperatur.

Dual Cure-Systeme können in Beschichtungsanwendungen und bei Verwendung als Klebstoffe Vorteile bei der sogenannten Schattenhärtung aufweisen. Hierunter ist derjenige Härtungsmechanismus zu verstehen, welcher nicht photochemisch, sondern beispielsweise thermisch abläuft. Dann kann das Beschichtungs- oder Klebmittel auch bei komplex geformten Substraten mit Abschattungen gegenüber einer Belichtungslampe weiter aushärten.

Im Lack- und Klebstoffbereich existieren mehrere Hauptgruppen der Dual Cure-Technologie: zwei verschiedene Radikalstarter (UV und thermisch), UV- und Feuchtigkeitsnachhärtung, UV- und PUR-2K-Härtung und eine kationisch katalysierte UV- und thermisch Härtung. Von der Firma Berlac AG wird beispielsweise unter der Bezeichnung Berlac 082.907 ein Dual Cure-Lacksystem angeboten, in dem zunächst eine Reaktion zwischen NCO-Gruppen und OH-Gruppen ausgelöst wird und dann einer UV-Härtung unterworfen wird.

Eine weitere denkbare Anwendung von Dual Cure-Systemen ist in additiven Fertigungsverfahren ("3D-Druck"). Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen, Bohren oder Zerspanen. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Eine Gruppe von additiven Fertigungsverfahren setzt radikalisch vernetzbare Harze ein, welche gegebenenfalls über einen zweiten Härtungsmechanismus ihre Endfestigkeit im gebildeten Gegenstand erhalten. Beispiele für solche Verfahren sind Stereolithographieverfahren und das davon abgeleitete sogenannte DLP-Verfahren.

Für den 3D-Druck bedeuten die Nachteile von konventionellen Dual Cure-Systemen hinsichtlich der Topfzeit, dass ein nicht gebrauchtes Aufbaumaterial schlecht wiederverwendet werden kann bzw. die geplanten Bauzeiten für ein Produkt die Topfzeit nicht überschreiten dürfen.

DE 10 2009 051445 A1 offenbart Polyisocyanat-Polyadditionsprodukte erhältlich aus
a) mindestens einem aliphatischen, cycloaliphatischen, araliphatischen und/oder aromatischen Polyisocyanat
b) mindestens einer NCO-reaktiven Verbindung
c) mindestens einem thermolatenten anorganischen Zinn-enthaltenden Katalysator
d) gegebenenfalls weiteren von c) verschiedenen Katalysatoren und/oder Aktivatoren
e) gegebenenfalls Füllstoffen, Pigmenten, Additiven, Verdickern, Entschäumern und/oder anderen Hilfs- und Zusatzstoffen,
wobei das Verhältnis des Gewichts des Zinns aus Komponente c) und des Gewichts der Komponente a) weniger als 3000 ppm beträgt, wenn Komponente a) ein aliphatisches Polyisocyanat ist und weniger als 95 ppm beträgt, wenn Komponente a) ein aromatisches Polyisocyanat ist und wobei als thermolatente Katalysatoren die folgenden zyklischen Zinnverbindungen eingesetzt werden:

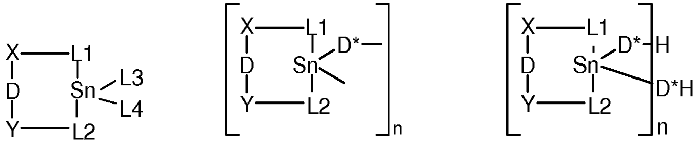

Eine Aufgabe der vorliegenden Erfindung ist es, mindestens einen Nachteil des Standes der Technik wenigstens zu einem Teil zu überwinden. Weiterhin stellt sich die Erfindung die Aufgabe, ein Fertigungsverfahren bereitzustellen, bei dem die herzustellenden Gegenstände aus einem Dual Cure-Aufbaumaterial möglichst kosteneffizient und/oder individualisiert und/oder ressourcenschonend erhalten werden können, was insbesondere die Wiederverwertbarkeit von Aufbaumaterial betrifft.

Erfindungsgemäß gelöst wird die Aufgabe durch ein Verfahren gemäß Anspruch 1, einen Gegenstand gemäß Anspruch 14 und eine Verwendung gemäß Anspruch 15. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines Gegenstands aus einem Aufbaumaterial, wobei das Aufbaumaterial radikalisch vernetzbare Gruppen, NCO-Gruppen sowie Gruppen mit Zerewitinoff-aktiven H-Atomen umfasst und der Gegenstand ein dreidimensionaler Gegenstand und/oder eine Schicht ist, zeichnet sich dadurch aus, dass während und/oder nach der Herstellung des Gegenstands das Aufbaumaterial auf eine Temperatur von ≥ 50 °C erwärmt wird und dass das Aufbaumaterial eine oder mehrere zyklische Zinnverbindungen der Formel F-I, F-II und/oder F-III umfasst: 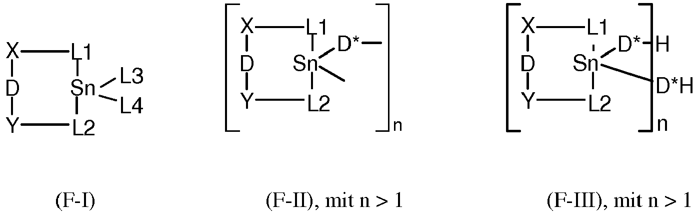 wobei gilt:
D steht für -O-, -S- oder -N(R1)-wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 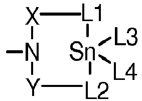 steht, oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 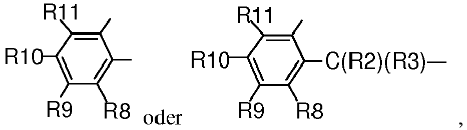
   wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, - SC(=S)-, -OS(=O)₂O-, -OS(=O)₂- oder -N(R12)-,
   wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15, - OC(=S)R16, -OS(=O)₂OR17, -OS(=O)₂R18 oder -NR19R20, oder L3 und L4 zusammen stehen für -L1-X-D-Y-L2-,
   wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

Die durch das erfindungsgemäße Verfahren erhaltene Schicht kann an einer Seite, an mehreren Seiten oder an keiner Seite eine oder mehrere weitere Oberflächen kontaktieren. Demgemäß kann es sich bei der Schicht um eine Beschichtung, eine Klebeverbindung oder einen freitragenden Film handeln.

Durch das erfindungsgemäße Verfahren gebildete dreidimensionale Gegenstände können Gegenstand in Aufbaurichtung seines Herstellungsverfahrens wenigstens abschnittsweise eine Höhe von ≥ 1 mm aufweisen. So erhaltene Beschichtungen und Klebeverbindungen können Dicken von ≥ 5 µm bis ≤ 800 µm aufweisen und so erhaltene Filme Dicken von ≥ 30 µm bis ≤ 500 µm.

Die Zinnverbindungen der Formeln F-I, F-II und F-III sind thermisch labil. Unterhalb einer bestimmten Temperatur weisen sie keine technisch sinnvolle katalytische Aktivität für die Reaktion von NCO-Gruppen mit funktionellen Gruppen, welche Zerewitinoff-aktive H-Atome tragen, auf. Insbesondere seien hierbei Urethanisierungen und Harnstoffbildungen zu nennen. Oberhalb einer bestimmten Temperatur steigt jedoch die katalytische Aktivität stark an. Ohne auf eine Theorie beschränkt zu sein wird angenommen, dass dann die Liganden Sn-Zentrum ganz oder teilweise dissoziieren und daher das Sn-Zentrum als Katalysator zur Verfügung steht. Insofern lässt sich von thermisch latenten Katalysatoren sprechen. Dadurch, dass die im Aufbaumaterial vorliegenden NCO-Gruppen unterhalb dieser Temperatur nicht abreagieren, kann das Aufbaumaterial auch leicht wiederverwertet werden. Erfindungsgemäß wird zur Aktivierung des Sn-Katalysators auf eine Temperatur von ≥ 50 °C, vorzugsweise ≥ 65 °C, mehr bevorzugt ≥ 80 °C, besonders bevorzugt ≥ 80 °C bis ≤ 200 °C erwärmt, so dass nach erfolgter Reaktion der NCO-Gruppen der Gegenstand erhalten wird. Das Erwärmen kann für eine Zeitspanne von ≥ 1 Minute, bevorzugt ≥ 5 Minuten, mehr bevorzugt ≥ 10 Minuten bis ≤ 24 Stunden bevorzugt ≤ 8 Stunden, besonders bevorzugt < 4 Stunden, erfolgen.

Vorzugsweise ist die katalytische Aktivität des thermolatenten Katalysators in dem Aufbaumaterial für das erfindungsgemäße Verfahren so gestaltet, das das Aufbaumaterial eine Topfzeit (definiert als die Zeit, in der sich die Viskosität des Materials verdoppelt) bei 23°C von > 1 h, bevorzugt > 2 h, besonders bevorzugt > 4 h und ganz besonders bevorzugt > 6 h aufweist.

In den Fällen, in denen die Zinnverbindungen der Formeln F-I, F-II und/oder F-III Liganden mit freien OH- und/oder NH-Resten aufweisen, kann der Katalysator bei der Polyisocyanat-Polyadditionsreaktion in das Produkt eingebaut werden. Besonderer Vorteil dieser einbaubaren Katalysatoren ist ihr stark reduziertes Fogging-Verhalten.

Die verschiedenen Herstellungsmethoden für die erfindungsgemäß zu verwendenden Zinn(IV)-Verbindungen bzw. ihrer Zinn(II)-Precursoren sind u.a. beschrieben in: J. Organomet. Chem. 2009 694 3184-3189, Chem. Heterocycl. Comp. 2007 43 813-834, Indian J. Chem. 1967 5 643-645 sowie in darin angeführter Literatur.

Der Gehalt der Zinnverbindungen der Formeln F-I, F-II und/oder F-III im Aufbaumaterial kann vom Typ der dem Aufbaumaterial zugrunde liegenden Isocyanate abhängig gemacht werden. So kann, wenn an ein aromatisches C-Atom gebundene NCO-Gruppen dominieren, der Gehalt ≤ 100 ppm, bezogen auf das Gesamtgewicht des Aufbaumaterials, betragen. Wenn an ein aliphatisches C-Atom gebundene NCO-Gruppen dominieren, der Gehalt ≤ 3000 ppm, bezogen auf das Gesamtgewicht des Aufbaumaterials, betragen.

Als Quelle von NCO-Gruppen im Aufbaumaterial eignen sich die dem Fachmann an sich bekannten organischen aliphatischen, cycloaliphatischen, araliphatischen und/oder aromatischen Polyisocyanate mit mindestens zwei Isocyanatgruppen pro Molekül sowie Gemische davon. Beispielsweise können NCO-terminierte Prepolymere eingesetzt werden.

Als NCO-reaktive Verbindungen mit Zerewitinoff-aktiven H-Atomen können alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z. B. 1,2-Ethandiol, 1,3- bzw. 1,2-Propandiol, 1,4-Butandiol, 1,5-Petandiol, 1,6-Hexandiol), Triole (z. B. Glycerin, Trimethylolpropan) und Tetraole (z. B. Pentaerythrit) sein, kurzkettige Aminoalkohole, Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole.

Das Aufbaumaterial umfasst radikalisch vernetzbare Gruppen, vorzugsweise (Meth)Acrylatgruppen. Sie können durch thermische und/oder durch photochemische Radikalstarter eine Vernetzungsreaktion untereinander eingehen. Daher lässt sich das Aufbaumaterial auch als radikalisch vernetzbares Aufbaumaterial oder radikalisch vernetzbares Harz beschreiben. Ferner handelt es sich gemäß der obigen Definition um ein Dual Cure-System.

Vorzugsweise umfasst das radikalisch vernetzbare Aufbaumaterial eine Verbindung, die aus der Reaktion eines NCO-terminierten Polyisocyanatprepolymers mit einem, bezogen auf die freien NCO-Gruppen, molaren Unterschuss eines Hydroxyalkyl(meth)acrylats erhältlich ist.

Ebenfalls vorzugsweise umfasst das radikalisch vernetzbare Aufbaumaterial eine Verbindung, die aus der Reaktion eines NCO-terminierten Polyisocyanurats mit einem, bezogen auf die freien NCO-Gruppen, molaren Unterschuss eines Hydroxyalkyl(meth)acrylats erhältlich ist.

Geeignete Polyisocyanate zur Herstellung der NCO-terminierten Polyisocyanurate und Prepolymere sind beispielsweise solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3-und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate.

Ferner können erfindungsgemäß auch aliphatische und/oder aromatische Isocyanat-Endgruppen tragende Prepolymere, wie beispielsweise aliphatische oder aromatische Isocyanat-Endgruppentragende Polyether-, Polyester-, Polyacrylat, Polyepoxyd oder Polycarbonat-Prepolymere als Edukte der Isocyanurat-Bildung eingesetzt werden. Geeignete Trimerisierungskatalysatoren werden weiter unten im Zusammenhang mit einer anderen Ausführungsform beschrieben.

Geeignete Hydroxyalkyl(meth)acrylate sind unter anderem Alkoxyalkyl(meth)acrylate mit 2 bis 12 Kohlenstoffatomen im Hydroxyalkylrest. Bevorzugt sind 2-Hydroxyethylacrylat, das bei der Anlagerung von Propylenoxid an Acrylsäure entstehende Isomerengemisch oder 4-Hydroxybutylacrylat.

Die Reaktion zwischen dem Hydroxyalkyl(meth)acrylat und dem NCO-terminierten Polyisocyanurat kann durch die üblichen Urethanisierungskatalysatoren wie DBTL katalysiert werden. Bei dieser Reaktion kann das molare Verhältnis zwischen NCO-Gruppen und OH-Gruppen des Hydroxyalkyl(meth)acrylats in einem Bereich von ≥10:1 bis ≤ 1,1:1 (bevorzugt ≥ 5:1 bis ≤ 1,5:1, mehr bevorzugt ≥ 4:1 bis ≤ 2:1) liegen. Die erhaltene härtbare Verbindung kann ein zahlenmittleres Molekulargewicht Mₙ von ≥ 200 g/mol bis ≤ 5000 g/mol aufweisen. Vorzugsweise beträgt dieses Molekulargewicht ≥ 300 g/mol bis ≤ 4000 g/mol, mehr bevorzugt ≥ 400 g/mol bis ≤ 3000 g/mol.

Besonders bevorzugt ist eine härtbare Verbindung, die aus der Reaktion eines NCO-terminierten Polyisocyanurats mit Hydroxethyl(meth)acrylat erhalten wurde, wobei das NCO-terminierte Polyisocyanurat aus 1,6-Hexamethylendiisocyanat in Gegenwart eines Isocyanat-Trimerisierungskatalysators erhalten wurde. Diese härtbare Verbindung hat ein zahlenmittleres Molekulargewicht Mₙ von ≥ 400 g/mol bis ≤ 3000 g/mol und ein molares Verhältnis von NCO-Gruppen und olefinischen C=C-Doppelbindungen in einem Bereich von ≥ 1:5 bis ≤ 5:1. besonders bevorzugt ≥1:3 bis ≤ 3:1, ganz besonders bevorzugt. ≥1:2 bis ≤ 2:1.

Das radikalisch vernetzbare Aufbaumaterial kann weiterhin Additive wie Füllstoffe, UV-Stabilisatoren, Radikalinhibitoren, Antioxidantien, Formtrennmittel, Wasserfänger, Slipadditive, Entschäumer, Verlaufsmittel, Rheologieadditive, Flammschutzmittel und/oder Pigmente enthalten. Diese Hilfs- und Zusatzmittel, ausgenommen Füllstoffe und Flammschutzmittel, liegen üblicherweise in einer Menge von weniger als 50 Gew.-%, vorzugsweise weniger als 30 Gew.-%, besonders bevorzugt bis zu 20 Gew.-%, besonders bevorzugt bis zu 10 Gew.-%, bezogen auf das radikalisch vernetzbare Harz vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht des radikalisch vernetzbaren Aufbaumaterials vor.

Geeignete Füllstoffe sind beispielsweise AlOH₃, CaCO₃, geschnittene Glasfasern, Karbonfasern, Polymerfasern, Metallpigmente wie TiO₂ und weitere bekannte übliche Füllstoffe. Diese Füllstoffe werden vorzugsweise in Mengen von höchstens 70 Gew.-%, bevorzugt höchstens 50 Gew.-%, besonders bevorzugt höchstens 30 Gew.-%, berechnet als Gesamtmenge an eingesetzten Füllstoffen bezogen auf das Gesamtgewicht des radikalisch vernetzbaren Harzes, eingesetzt.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren dem radikalisch vernetzbaren Aufbaumaterial vorzugsweise in Mengen von 0,001 bis 3,0 Gew.-%, besonders bevorzugt 0,005 bis 2 Gew.-%, berechnet als Gesamtmenge an eingesetzten UV-Stabilisatoren bezogen auf das Gesamtgewicht des radikalisch vernetzbaren Aufbaumaterials, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden. Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht des radikalisch vernetzbaren Aufbaumaterials, eingesetzt.

Geeignete Radikalinhibitoren bzw. Verzögerer sind besonders solche, die eine unkontrollierte radikalische Polymerisation der Harzformulierung außerhalb des gewünschten (bestrahlten) Bereiches gezielt inhibieren. Diese sind für eine gute Randschärfe und Abbildungsgenauigkeit im Vorläufer entscheidend. Geeignete Radikalinhibitoren müssen entsprechend der gewünschten Radikalausbeute aus dem Bestrahlungs-/Belichtungsschritt und der Polymerisationsgeschwindigkeit und Reaktivität/Selektivität der Doppelbindungsträger ausgesucht werden. Geeignete Radikalinhibitoren sind z. B. 2,2-(2,5-thiophendiyl)bis(5-tertbutylbenzoxazol), Phenothiazin, Hydrochinone, Hydrochinonether, Quinonalkyde und Nitroxylverbindungen sowie Mischungen davon, Benzoquinone, Kupfer Salze, Brenzcatechine, Cresole, Nitrobenzol und Sauerstoff. Diese Antioxidantien werden vorzugsweise in Mengen von 0,001 Gew% bis 3 Gew.% eingesetzt.

Vorzugsweise ist die molare Konzentration von Zerewitinoff-aktiven H-Atomen im Verhältnis zu freien Isocyanaten ≥ 0,6 und ≤ 1,5, bevorzugt, ≥ 0,8 und ≤ 1,4, besonders bevorzugt, ≥ 0,9 und ≤ 1,3, und ganz besonders bevorzugt ≥ 1 und ≤ 1,2.

In einer bevorzugten Ausführungsform ist der Gegenstand ein dreidimensionaler Gegenstand, der Gegenstand wird aus einem Vorläufer erhalten und das Verfahren umfasst die Schritte:
I) Abscheiden von radikalisch vernetztem Aufbaumaterial auf einem Träger, so dass eine Lage eines mit dem Träger verbundenen Aufbaumaterials erhalten wird, welche einem ersten ausgewählten Querschnitt des Vorläufers entspricht;
II) Abscheiden von radikalisch vernetztem Aufbaumaterial auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
   wobei das Abscheiden von radikalisch vernetztem Aufbaumaterial wenigstens in Schritt II) durch Belichten und/oder Bestrahlen eines ausgewählten Bereichs eines radikalisch vernetzbaren Aufbaumaterials, entsprechend dem jeweils ausgewählten Querschnitt des Vorläufers, erfolgt und
   wobei das radikalisch vernetzbare Aufbaumaterial eine Viskosität (23 °C, DIN EN ISO 2884-1) von ≥ 5 mPas bis ≤ 1000000 mPas aufweist,
   wobei das radikalisch vernetzbare Aufbaumaterial eine härtbare Komponente umfasst, in der NCO-Gruppen und olefinische C=C-Doppelbindungen vorliegen
   und nach Schritt III) weiterhin Schritt IV) durchgeführt wird:
IV) Erwärmen des nach Schritt III) erhaltenen Vorläufers auf eine Temperatur von ≥ 50 °C, so dass der Gegenstand erhalten wird.

In dieser Variante wird somit der Gegenstand mittels eines additiven Herstellungsverfahrens und in zwei Herstellungsabschnitten erhalten. Der erste Herstellungsabschnitt kann als Aufbauabschnitt angesehen werden. Dieser Aufbauabschnitt lässt sich mittels strahlenoptischer additiver Fertigungsverfahren wie dem Inkjet-Verfahren, der Stereolithographie oder dem DLP (digital light processing)-Verfahren realisieren und ist Gegenstand der Schritte I), II) und III). Der zweite Herstellungsabschnitt kann als Härtungsabschnitt angesehen werden und ist Gegenstand des Schritts IV). Hier wird der nach dem Aufbauabschnitt erhaltene Vorläufer oder intermediäre Gegenstand ohne seine Form weiter zu verändern in einen mechanisch dauerhafteren Gegenstand überführt.

In Schritt I) dieser Variante des Verfahrens erfolgt das Abscheiden eines radikalisch vernetzten Aufbaumaterials auf einem Träger. Dieses ist gewöhnlich der erste Schritt in Inkjet-, Stereolithographie- und DLP-Verfahren. Auf diese Weise wird eine Lage eines mit dem Träger verbundenen Aufbaumaterials erhalten, welche einem ersten ausgewählten Querschnitt des Vorläufers entspricht.

Gemäß der Anweisung von Schritt III) wird Schritt II) so lange wiederholt, bis der gewünschte Vorläufer gebildet ist. In Schritt II) erfolgt das Abscheiden eines radikalisch vernetzten Aufbaumaterials auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist. Bei der zuvor aufgetragenen Lage des Aufbaumaterials kann es sich um die erste Lage aus Schritt I) oder um eine Lage aus einer vorigen Durchlauf des Schritts II) handeln.

Es ist in dieser Verfahrensvariante vorgesehen, dass das Abscheiden eines radikalisch vernetzten Aufbaumaterials wenigstens in Schritt II) (vorzugsweise auch in Schritt I) durch Belichten und/oder Bestrahlen eines ausgewählten Bereichs eines radikalisch vernetzbaren Harzes, entsprechend dem jeweils ausgewählten Querschnitt des Gegenstandes, erfolgt. Dieses kann sowohl durch selektives Belichten (Stereolithographie, DLP) des vernetzbaren Aufbaumaterials als auch durch selektives Auftragen des vernetzbaren Aufbaumaterials, gefolgt von einem Belichtungsschritt, der aufgrund des vorigen selektiven Auftragens des vernetzbaren Aufbaumaterials nicht mehr selektiv sein muss (Inkjet-Verfahren).

Im Kontext dieser Erfindung werden die Begriffe "radikalisch vernetzbares Aufbaumaterial" und "radikalisch vernetztes Aufbaumaterial" benutzt. Hierbei wird das radikalisch vernetzbare Aufbaumaterial durch das Belichten und/oder Bestrahlen, welches radikalische Vernetzungsreaktionen auslöst, in das radikalisch vernetzte Aufbaumaterial überführt. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung der Belichtung und/oder Bestrahlung des radikalisch vernetzbaren Harzes.

Das radikalisch vernetzbare Aufbaumaterial weist in dieser Verfahrensvariante eine Viskosität (23 °C, DIN EN ISO 2884-1) von ≥ 5 mPas bis ≤ 1000000 mPas auf. Somit ist es zumindest für die Zwecke der additiven Fertigung als flüssiges Harz anzusehen. Vorzugsweise beträgt die Viskosität ≥ 50 mPas bis ≤ 100000 mPas, mehr bevorzugt ≥ 500 mPas bis ≤ 50000 mPas.

Weiterhin umfasst in dem Verfahren das radikalisch vernetzbare Harz eine härtbare Komponente, in der NCO-Gruppen und olefinische C=C-Doppelbindungen vorliegen. In dieser härtbaren Komponente kann das molare Verhältnis von NCO-Gruppen und olefinischen C=C-Doppelbindungen in einem Bereich von ≥ 1:5 bis ≤ 5:1 (bevorzugt ≥ 1:4 bis ≤ 4:1, mehr bevorzugt ≥ 1:3 bis ≤ 3:1) liegen. Das molekulare Verhältnis dieser funktionellen Gruppen lässt sich durch die Integration der Signale einer Probe im ¹³C-NMR-Spektrum ermitteln.

Neben der härtbaren Komponente kann das radikalisch vernetzbare Aufbaumaterial auch eine nicht härtbare Komponente umfassen, in der beispielsweise Stabilisatoren, Füllstoffe und dergleichen zusammengefasst sind. In der härtbaren Komponente können die NCO-Gruppen und die olefinischen C=C-Doppelbindungen in getrennten Molekülen und/oder in einem gemeinsamen Molekül vorliegen. Wenn NCO-Gruppen und olefinische C=C-Doppelbindungen in getrennten Molekülen vorliegen, kann der nach Schritt IV) dieser Verfahrensvariante erhaltene Körper ein interpenetrierendes Polymer-Netzwerk aufweisen

In dieser Variante des Verfahrens wird weiterhin nach Schritt III) weiterhin Schritt IV) durchgeführt. In diesem Schritt erfolgt das Erwärmen des nach Schritt III) erhaltenen Vorläufers auf eine Temperatur von ≥ 50 °C, vorzugsweise ≥ 65 °C, mehr bevorzugt ≥ 80 °C, besonders bevorzugt ≥ 80 °C bis ≤ 200 °C, so dass der Gegenstand erhalten wird. Das Erwärmen kann für eine Zeitspanne von ≥ 1 Minute, bevorzugt ≥ 5 Minuten, mehr bevorzugt ≥ 10 Minuten bis ≤ 24 Stunden bevorzugt ≤ 8 Stunden, besonders bevorzugt < 4 Stunden, erfolgen.

Vorzugsweise wird die Reaktion durchgeführt, bis ≤ 30%, bevorzugt ≤ 20% und mehr bevorzugt ≤ 15% der ursprünglich vorhandenen NCO-Gruppen noch vorhanden sind. Dieses lässt sich mittels quantitativer IR-Spektroskopie bestimmen.

Es ist bevorzugt, dass Schritt IV) erst dann durchgeführt wird, wenn das gesamte Aufbaumaterial des Vorläufers seinen Gelpunkt erreicht hat. Der Gelpunkt wird als erreicht angesehen, wenn in einer dynamisch-mechanischen Analyse (DMA) mit einem Platte/Platte-Oszillationsviskosimeter gemäß ISO 6721-10 bei 20 °C sich die Graphen des Speichermoduls G' und des Verlustmoduls G" kreuzen. Gegebenenfalls wird der Vorläufer weiterer Belichtung und/oder Bestrahlung zur Vervollständigung der radikalischen Vernetzung ausgesetzt. Das radikalisch vernetzte Aufbaumaterial kann ein Speichermodul G' (DMA, Platte/Platte-Oszillationsviskosimeter gemäß ISO 6721-10 bei 20 °C und einer Scherrate von 1/s) von ≥ 10⁶ Pa aufweisen.

In einer weiteren bevorzugten Ausführungsform weist das Verfahren die Merkmale auf:
- der Träger ist innerhalb eines Behälters angeordnet und ist vertikal in Schwerkraftrichtung absenkbar,
- der Behälter enthält das radikalisch vernetzbare Aufbaumaterial in einer Menge, welche ausreicht, um wenigstens den Träger und eine in vertikaler Richtung gesehenen obersten Oberfläche von auf dem Träger abgeschiedenem vernetztem Aufbaumaterial zu bedecken,
- vor jedem Schritt II) wird der Träger um eine vorbestimmte Strecke abgesenkt, so dass über der in vertikaler Richtung gesehen obersten Lage des vernetzten Aufbaumaterials sich eine Schicht des radikalisch vernetzbaren Aufbaumaterials bildet und
- in Schritt II) belichtet und/oder bestrahlt ein Energiestrahl den ausgewählten Bereich der Schicht des radikalisch vernetzbaren Aufbaumaterials, entsprechend dem jeweils ausgewählten Querschnitt des Vorläufers.

Somit wird gemäß dieser Ausführungsform das additive Fertigungsverfahren der Stereolithographie (SLA) abgedeckt. Der Träger kann beispielsweise jeweils um eine vorbestimmte Strecke von ≥ 1 µm bis ≤ 2000 µm abgesenkt werden.

In einer weiteren bevorzugten Ausführungsform weist das Verfahren die Merkmale auf:
- der Träger ist innerhalb eines Behälters angeordnet ist und vertikal entgegen der Schwerkraftrichtung anhebbar,
- der Behälter stellt das radikalisch vernetzbare Aufbaumaterial bereit,
- vor jedem Schritt II) wird der Träger um eine vorbestimmte Strecke angehoben, so dass unter der in vertikaler Richtung gesehen untersten Lage des vernetzten Aufbaumaterials sich eine Schicht des radikalisch vernetzbaren Aufbaumaterials bildet und
- in Schritt II) belichtet und/oder bestrahlt eine Mehrzahl von Energiestrahlen den ausgewählten Bereich der Schicht des radikalisch vernetzbaren Aufbaumaterials, entsprechend dem jeweils ausgewählten Querschnitt des Vorläufers, gleichzeitig.

Somit wird gemäß dieser Ausführungsform das additive Fertigungsverfahren der DLP-Technologie abgedeckt, wenn die Mehrzahl von Energiestrahlen über ein Array von einzeln ansteuerbaren Mikrospiegeln das per Belichtung und/oder Bestrahlung bereitzustellende Bild erzeugen. Der Träger kann beispielsweise jeweils um eine vorbestimmte Strecke von ≥ 1 µm bis ≤ 2000 µm angehoben werden.

In einer weiteren bevorzugten Ausführungsform weist das Verfahren die Merkmale auf:
- in Schritt In wird das radikalisch vernetzbare Aufbaumaterial aus einem oder mehreren Druckköpfen, entsprechend dem jeweils ausgewählten Querschnitt des Vorläufers, aufgetragen und wird anschließend belichtet und/oder bestrahlt.

Somit wird gemäß dieser Ausführungsform das additive Fertigungsverfahren der Inkjet-Methode abgedeckt: es wird das vernetzbare Aufbaumaterial gegebenenfalls separat von den erfindungsgemäßen Katalysatoren selektiv durch einen oder mehrere Druckköpfe aufgetragen und die anschließende Härtung durch Bestrahlen und/oder Belichtung kann unselektiv sein, beispielsweise durch eine UV-Lampe. Bei dem oder den Druckköpfen zum Auftragen des vernetzbaren Aufbaumaterials kann es sich um einen (modifizierten) Druckkopf für Tintenstrahldruckverfahren handeln. Der Träger kann vom Druckkopf weg bewegbar ausgestaltet sein oder der Druckkopf kann vom Träger weg bewegbar ausgestaltet sein. Die Inkremente der Abstandsbewegungen zwischen Träger und Druckkopf können beispielsweise in einem Bereich von ≥ 1 µm bis ≤ 2000 µm liegen.

In einer weiteren bevorzugten Ausführungsform ist der Gegenstand eine Beschichtung und das Verfahren umfasst die Schritte:
- Auftragen des Aufbaumaterials auf ein Substrat
- Einwirken von Wärme und/oder UV-Strahlung auf das aufgetragene Aufbaumaterial, so dass im aufgetragenen Aufbaumaterial eine zumindest teilweise Vernetzung der radikalisch vernetzbaren Gruppen erfolgt
- Erwärmen des aufgetragenen Aufbaumaterials auf eine Temperatur von ≥ 50 °C, so dass im aufgetragenen Aufbaumaterial zumindest teilweise eine Reaktion zwischen NCO-Gruppen und Gruppen mit Zerewitinoff-aktiven H-Atomen erfolgt.

Das Einwirken von Wärme kann zum Beispiel zum thermischen Zerfall von Peroxid-basierten Radikalstartern führen. Das Einwirken von UV-Strahlung erfolgt mittels UV-Licht (1400 nm bis 315 nm Wellenlänge) und aktiviert photochemische Radikalstarter. In einem weiterem Schritt wird der latente Sn-Urethanisierungskatalysator aktiviert, um den zweiten Härtungsmechanismus ablaufen zu lassen.

In einer weiteren bevorzugten Ausführungsform ist der Gegenstand eine Klebeverbindung und das Verfahren umfasst die Schritte:
- Auftragen des Aufbaumaterials auf ein erstes Substrat
- Kontaktieren des aufgetragenen Aufbaumaterials mit einem zweiten Substrat
- Einwirken von Wärme und/oder UV-Strahlung auf das aufgetragene Aufbaumaterial, so dass im aufgetragenen Aufbaumaterial eine zumindest teilweise Vernetzung der radikalisch vernetzbaren Gruppen erfolgt
- Erwärmen des aufgetragenen Aufbaumaterials auf eine Temperatur von ≥ 50 °C, so dass im aufgetragenen Aufbaumaterial zumindest teilweise eine Reaktion zwischen NCO-Gruppen und Gruppen mit Zerewitinoff-aktiven H-Atomen erfolgt.

Das Einwirken von Wärme kann zum Beispiel zum thermischen Zerfall von Peroxid-basierten Radikalstartern führen. Das Einwirken von UV-Strahlung erfolgt mittels UV-Licht (1400 nm bis 315 nm Wellenlänge) und aktiviert photochemische Radikalstarter. In einem weiterem Schritt wird der latente Sn-Urethanisierungskatalysator aktiviert, um den zweiten Härtungsmechanismus ablaufen zu lassen.

In einer weiteren bevorzugten Ausführungsform umfasst das Aufbaumaterial weiterhin einen Radikalstarter und/oder einen Isocyanat-Trimerisierungskatalysator. Um eine unerwünschte Erhöhung der Viskosität des radikalisch vernetzbaren Aufbaumaterials zu verhindern, können Radikalstarter und/oder Isocyanat-Trimerisierungskatalysator erst unmittelbar vor Beginn des erfindungsgemäßen Verfahrens dem Aufbaumaterial hinzugefügt werden.

Als Radikalstarter kommen thermische und/oder photochemische Radikalstarter (Photoinitiatoren) in Betracht. Es ist auch möglich, dass gleichzeitig thermische und photochemische Radikalstarter eingesetzt werden. Geeignete thermische Radikalstarter sind beispielsweise (AIBN), Dibenzoylperoxid (DBPO), Di-tert-butylperoxid, Dicumylperoxid und/oder anorganische Peroxide wie Peroxodisulfate.

Bei den Photoinitiatoren wird prinzipiell zwischen zwei Typen unterschieden, dem unimolekularen Typ (I) und dem bimolekularen Typ (II). Geeignete Typ (I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind Typ (II)-Initiatoren wie Benzoin und seine Derivate, Benzilketale, Acylphosphinoxide, 2,4,6-Trimethyl-benzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Spezielle Beispiele sind Irgacur®500 (eine Mischung von Benzophenon und (1-Hydroxycyclohexyl)phenylketon, Fa. Ciba, Lampertheim, DE), Irgacure®819 DW (Phenylbis-(2, 4, 6-trimethylbenzoyl)phosphinoxid, Fa. Ciba, Lampertheim, DE) oder Esacure® KIP EM (Oligo-[2-hydroxy-2-methyl-1-[4-(1-methylvinyl)-phenyl]-propanone], Fa. Lamberti, Aldizzate, Italien) und Bis-(4-methoxybenzoyl)diethylgerman. Es können auch Gemische dieser Verbindungen eingesetzt werden.

Bei den Photoinitiatoren sollte darauf geachtet werden, dass sie eine ausreichende Reaktivität gegenüber der verwendeten Strahlenquelle haben. Es ist eine Vielzahl von Photoinitiatoren auf dem Markt bekannt. Durch kommerziell verfügbare Photoinitiatoren wird der Wellenlängenbereich im gesamten UV-VIS Spektrum abgedeckt. Photoinitiatoren finden Einsatz bei der Herstellung von Lacken, Druckfarben und Klebstoffen sowie im Dentalbereich.

In dieser Verfahrensvariante kommt der Photoinitiator im Allgemeinen in einer auf die Menge der eingesetzten härtbaren olefinisch ungesättigte Doppelbindungen tragenden Komponente bezogenen Konzentration von 0,01 bis 6,0 Gew.-%, bevorzugt von 0,05 bis 4,0 Gew.-% und besonders bevorzugt von 0,1 bis 3,0 Gew.-% zum Einsatz.

In einer weiteren bevorzugten Ausführungsform wird das Aufbaumaterial aus der Vermischung einer NCO-Gruppen enthaltenden Komponente sowie einer Gruppen mit Zerewitinoff-aktiven H-Atomen enthaltenden Komponente erhalten und die Vermischung erfolgt ≤ 5 Minuten vor Beginn des Verfahrens. In Verfahren wie DLP-Verfahren ist es ferner bevorzugt, dass die Mischung des Aufbaumaterials kontinuierlich erzeugt wird und dem Aufbauprozess zugeführt wird. Um unerwünschte Nebenreaktionen zu vermeiden können die übrigen Bestandteile des Aufbaumaterials in der Zerewitinoff-aktive H-Atomen enthaltenden Komponente vorliegen.

In einer weiteren bevorzugten Ausführungsform ist in der Definition gemäß den vorstehenden Ausführungen D -N(R1)- und R1 ist Wasserstoff oder ein Alkyl-, Aralkyl-, Alkaryl- oder Arylrest mit bis zu 20 C-Atomen ist oder der Rest

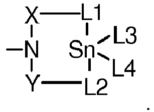

In einer weiteren bevorzugten Ausführungsform ist in der Definition gemäß den vorstehenden Ausführungen R1 Wasserstoff oder ein Methyl-, Ethyl-, Propyl-, Butyl-, Hexyl-, Octyl-, Ph-, oder CH₃Ph-Rest oder der Rest 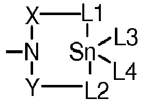 und Propyl-, Butyl-, Hexyl-, und Octyl stehen für alle isomeren Propyl-, Butyl-, Hexyl- sowie Octylreste.

In einer weiteren bevorzugten Ausführungsform ist in der Definition gemäß den vorstehenden Ausführungen D* -O-.

Weitere bevorzugte Merkmale für die Zinnverbindungen gemäß den vorstehenden Ausführungen werden nachfolgend aufgeführt:
Bevorzugt handelt es sich bei X, Y und Z um die Alkylenreste -C(R2)(R3)-, -C(R2)(R3)-C(R4)(R5)- oder den ortho-Arylenrest

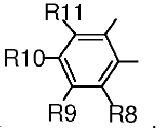

Bevorzugt handelt es sich bei R2 bis R7 um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 8 C-Atomen, ganz besonders bevorzugt um Wasserstoff oder Alkylreste mit bis zu 8 C-Atomen, noch weiter bevorzugt um Wasserstoff oder Methyl.

Bevorzugt handelt es sich bei R8 bis R11 um Wasserstoff oder Alkylreste mit bis zu 8 C-Atomen, besonders bevorzugt um Wasserstoff oder Methyl.

Bevorzugt handelt es sich bei L1, L2 und L5 um -NR12-, -S-, -SC(=S)-, -SC(=O)-, -OC(=S)-, -O-, oder -OC(=O)-, besonders bevorzugt um -O-, oder -OC(=O)-.

Bevorzugt handelt es sich bei R12 um Wasserstoff oder einen Alkyl-, Aralkyl-, Alkaryl- oder Arylrest mit bis zu 20 C-Atomen, besonders bevorzugt um Wasserstoff oder einen Alkyl-, Aralkyl-, Alkaryl- oder Arylrest mit bis zu 12 C-Atomen, ganz besonders bevorzugt um Wasserstoff oder einen Methyl-, Ethyl-, Propyl-, Butyl-, Hexyl-oder Octyl-Rest, wobei Propyl-, Butyl-, Hexyl-, und Octyl für alle isomeren Propyl-, Butyl-, Hexyl- sowie Octylreste stehen.

Bevorzugt handelt es sich bei L3 und L4 um -Hal, -OH, -SH, -OR13, -OC(=O)R14, wobei die Reste R13 und R14 bis zu 20 Kohlenstoffatome, bevorzugt bis zu 12 Kohlenstoffatome aufweisen.

Besonders bevorzugt handelt es sich bei L3 und L4 um Cl-, MeO-, EtO-, PrO-, BuO-, HexO-, OctO-, PhO-, Formiat, Acetat, Propanoat, Butanoat, Pentanoat, Hexanoat, Octanoat, Laurat, Lactat oder Benzoat, wobei Pr, Bu, Hex und Oct für alle isomeren Propyl-, Butyl-, Hexyl- sowie Octylreste stehen, noch weiter bevorzugt um Cl-, MeO-, EtO-, PrO-, BuO-, HexO-, OctO-, PhO-, Hexanoat, Laurat, oder Benzoat, wobei Pr, Bu, Hex und Oct für alle isomeren Propyl-, Butyl-, Hexyl- sowie Octylreste stehen.

Bevorzugt handelt es bei R15 bis R20 um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 12 C-Atomen, ganz besonders bevorzugt um Wasserstoff, Methyl-, Ethyl-, Propyl-, Butyl-, Hexyl-, oder Octyl-Reste, wobei Propyl-, Butyl-, Hexyl-, und Octyl für alle isomeren Propyl-, Butyl-, Hexyl- sowie Octylreste stehen.

Die Einheiten L1-X, L2-Y und L5-Z stehen bevorzugt für -CH₂CH₂O-, -CH₂CH(Me)O-, -CH(Me)CH₂O-, -CH₂C(Me)₂O-, -C(Me)₂ CH₂O- oder -CH₂C(=O)O-.

Die Einheit L1-X-D-Y-L2 steht bevorzugt für: HN[CH₂CH₂O-]₂, HN[CH₂CH(Me)O-]₂, HN[CH₂CH(Me)O-][CH(Me)CH₂O-], HN[CH₂C(Me)₂O-]₂, HN[CH₂C(Me)₂O-][C(Me)₂CH₂O-], HN[CH₂C(=O)O-]₂, MeN[CH₂CH₂O-]₂, MeN[CH₂CH(Me)O-]₂, MeN[CH₂CH(Me)O-] [CH(Me)CH₂O-], MeN[CH₂C(Me)₂O-]₂, MeN[CH₂C(Me)₂O-][C(Me)₂CH₂O-], MeN[CH₂C(=O)O-]₂, EtN[CH₂CH₂O-]₂, EtN[CH₂CH(Me)O-]₂, EtN[CH₂CH(Me)O-][CH(Me)CH₂O-], EtN[CH₂C(Me)₂O-]₂, EtN[CH₂C(Me)₂O-][C(Me)₂CH₂O-], EtN[CH₂C(=O)O-]₂, PrN[CH₂CH₂O-]₂, PrN[CH₂CH(Me)O-]₂, PrN[CH₂CH(Me)O-][CH(Me)CH₂O-], PrN[CH₂C(Me)₂O-]₂, PrN[CH₂C(Me)₂O-][C(Me)₂CH₂O-], PrN[CH₂C(=O)O-]₂, BuN[CH₂CH₂O-]₂, BuN[CH₂CH(Me)O-]₂, BuN[CH₂CH(Me)O-][CH(Me)CH₂O-], BuN[CH₂C(Me)₂O-]₂, BuN[CH₂C(Me)₂O-][C(Me)₂CH₂O-], BuN[CH₂C(=O)O-]₂, HexN[CH₂CH₂O-]₂, HexN[CH₂CH(Me)O-]₂, HexN[CH₂CH(Me)O-][CH(Me)CH₂O-], HexN[CH₂C(Me)₂O-]₂, HexN[CH₂C(Me)₂O-][C(Me)₂CH₂O-], HexN[CH₂C(=O)O-]₂, OctN[CH₂CH₂O-]₂, OctN[CH₂CH(Me)O-]₂, OctN[CH₂CH(Me)O-][CH(Me)CH₂O-], OctN[CH₂C(Me)₂O-]₂, OctN[CH₂C(Me)₂O-][C(Me)₂CH₂O-], OctN[CH₂C(=O)O-]₂, wobei Pr, Bu, Hex und Oct für alle isomeren Propyl-, Butyl- sowie Octylreste stehen können, PhN[CH₂CH₂O-]₂, PhN[CH₂CH(Me)O-]₂, PhN[CH₂CH(Me)O-] [CH(Me)CH₂O-], PhN[CH₂C(Me)₂O-]₂, PhN[CH₂C(Me)₂O-] [C(Me)₂CH₂O-], PhN[CH₂C(=O)O-]₂,

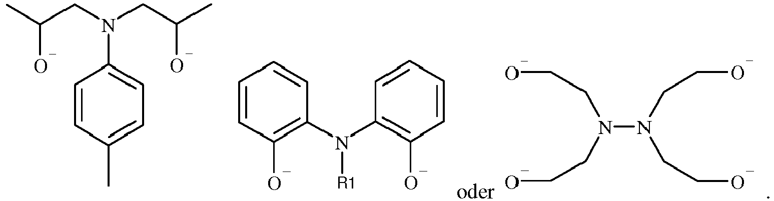

Die Zinnverbindungen - wie dem Fachmann bekannt ist - neigen zur Oligomerisierung, so dass häufig mehrkernige Zinnverbindungen oder Gemische aus ein- und mehrkernigen Zinnverbindungen vorliegen. In den mehrkernigen Zinnverbindungen sind die Zinnatome bevorzugt über Sauerstoffatome (,Sauerstoffbrücken', *vide intra*) miteinander verbunden. Typische oligomere Komplexe (mehrkernige Zinnverbindungen) entstehen z.B. durch Kondensation der Zinnatome über Sauerstoff oder Schwefel, z.B. 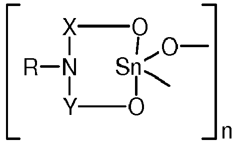 mit n > 1 (vgl. Formel F-II). Bei niedrigen Oligomerisierungsgraden findet man häufig cyclische, bei höheren Oligomerisierungsgraden lineare Oligomere mit OH- bzw. SH-Endgruppen (vgl. Formel F-III).

In einer weiteren bevorzugten Ausführungsform ist die zyklische Zinnverbindung ausgewählt aus der Gruppe mono- oder polyzyklischer Zinnverbindungen vom Typ:
1,1-Di-"R"-5-"organyl"-5-aza-2,8-dioxa-1-stanna-cyclooctane,
1,1-Di-"R"-5-(N-"organyl")aza-3,7-di-"organyl"-2,8-dioxa-1-stanna-cyclooctane,
1,1-Di-"R"-5-(N-"organyl")aza-3,3,7,7-tetra-"organyl"-2,8-dioxa-1-stanna-cyclooctane,
4,12-Di-"organyl"-1,7,9,15-tetraoxa-4,12-diaza-8-stannaspiro[7.7]pentadecane,
4,12-Di-"organyl"-2,6,10,14-tetra-"organyl"-1,7,9,15-tetraoxa-4,12-diaza-8-stannaspiro[7.7]pentadecane,
4,12-Di-"organyl"-2,2,6,6,10,10,14,14-octa-"organyl"-1,7,9,15-tetraoxa-4,12-diaza-8-stannaspiro[7.7]pentadecane,
wobei "R" für D*, L3 oder L4, wie oben definiert, steht und "organyl" für R1, wie oben definiert, steht.

In einer weiteren bevorzugten Ausführungsform werden als zyklische Zinnverbindung eine oder mehrere der nachfolgenden Verbindungen eingesetzt:
4,12-Di-n-butyl-1,7,9,15-tetraoxa-4,12-diaza-8-stannaspiro[7.7]pentadecan, 4,12-Di-n-butyl-2,6,10,14-tetramethyl-1,7,9,15-tetraoxa-4,12-diaza-8-stannaspiro[7.7]pentadecan,
2,4,6,10,12,14-Hexamethyl-1,7,9,15-tetraoxa-4,12-diaza-8-stannaspiro[7.7]pentadecan,
4,12-Di-n-octyl-2,6,10,14-tetramethyl-1,7,9,15-tetraoxa-4,12-diaza-8-stannaspiro[7.7]pentadecan,
4,12-Di-n-octyl-1,7,9,15-tetraoxa-4,12-diaza-8-stannaspiro[7.7]pentadecan,
4,12-Dimethyl-1,7,9,15-tetraoxa-4,12-diaza-8-stannaspiro[7.7]pentadecan,
1,1-Dichloro-5-methyl-5-aza-2,8-dioxa-1-stannacyclooctan,
1,1-Diisopropyl-5-methyl-5-aza-2,8-dioxa-1-stannacyclooctan,
1,1-Dibenzoyl-3,3,7,7-tetramethyl 5-n-octyl-5-aza-2,8-dioxa-1-stannacyclooctan,
1,1-Dibenzoyl-5-n-octyl-5-aza-2,8-dioxa-1-stannacyclooctan,
1,1-Bis(p-dodecylphenylsulfonyl)-5-n-octyl-5-aza-2,8-dioxa-1-stannacyclooctan,
2-Benzoyloxy-6-octyl-4,8-dioxo-1,3,6,2-dioxazastannocan-2-ylbenzoat
oder Mischungen davon.

Das Aufbaumaterial im erfindungsgemäßen Verfahren kann beispielsweise die folgende Zusammensetzung haben, wobei alle Zahlenangaben in Gewichts-% sind und sich die Angaben in Gewichts-% zu ≤ 100 Gewichts-% addieren:

| | |
|---|---|
| NCO-funktionelles Urethanacrylat | 20 - 30 |
| Acrylat | 35 - 45 |
| Polyol | 30 - 40 |
| Photoinitiator 1 | 0,1 - 0,3 |
| Photoinitiator 2 | 0,1 - 0,3 |
| UV-Inhibitor | 0,01 - 0,3 |
| Sn-Kat | 0,01 - 0,2 |

### Im Speziellen:

| | |
|---|---|
| NCO-funktionelles Urethanacrylat | 25,4 |
| Acrylat | 39,5 |
| Polyol | 34,3 |
| Photoinitiator 1 | 0,22 |
| Photoinitiator 2 | 0,22 |
| UV-Inhibitor | 0,2 |
| Sn-Kat | 0,034 - 0,102 |

NCO-funktionelles Urethanacrylat: beispielsweise ein Urethanacrylat, welches aus der Umsetzung von trimerem HDI-Isocyanurat mit Hydroxypropylacrylat bei einer NCO-Kennzahl von 200 durch Rühren bei 60 °C, bis alle OH Gruppen umgesetzt sind, erhalten werden kann.
Acrylat: beispielsweise Isobornylacrylat
Polyol: beispielsweise ein Polyetherpolyol wie Polytetramethylenetherglycol mit einer Molekülmasse von 1000 g/mol (PolyTHF 1000)
Photoinitiator 1: Acylphosphinoxid, beispielsweise Ethyl(2,4,6-trimethylbenzoyl)phenylphosphinat (TPOL)
Photoinitiator 2: Germanium-basierter Photoinitiator wie beispielsweise Bis-4-(methoxybenzoyl)diethylgerman
UV-Inhibitor: beispielsweise Mayzo OB+ (2,2'-(2,5-thiophendiyl)bis(5-tertbutylbenzoxazol))
Sn-Kat: zyklische Zinnverbindung der Formel F-I, F-II oder F-III

Ein weiterer Gegenstand der vorliegenden Erfindung ist ein Gegenstand, erhalten durch ein erfindungsgemäßes Verfahren, wobei der Gegenstand in Aufbaurichtung seines Herstellungsverfahrens wenigstens abschnittsweise eine Höhe von ≥ 1 mm, vorzugsweise ≥ 5 mm, aufweist.

Die Erfindung betrifft ebenfalls die Verwendung von zyklischen Zinnverbindungen der Formel F-I, F-II und/oder F-III, wie in den vorstehenden Ausführungen definiert, als thermisch latente Urethanisierungskatalysatoren in Aufbaumaterialien für additive Fertigungsverfahren.

## Patentansprüche

1. Verfahren zur Herstellung eines Gegenstands aus einem Aufbaumaterial, wobei das Aufbaumaterial radikalisch vernetzbare Gruppen, NCO-Gruppen sowie Gruppen mit Zerewitinoff-aktiven H-Atomen umfasst und der Gegenstand ein dreidimensionaler Gegenstand und/oder eine Schicht ist,
**dadurch gekennzeichnet, dass**
während und/oder nach der Herstellung des Gegenstands das Aufbaumaterial auf eine Temperatur von ≥ 50 °C erwärmt wird und dass
das Aufbaumaterial eine oder mehrere zyklische Zinnverbindungen der Formel F-I, F-II und/oder F-III umfasst: 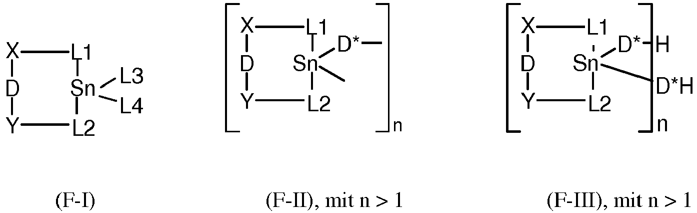 wobei gilt:
D steht für -O-, -S- oder -N(R1)-
wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 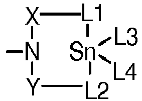 steht, oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 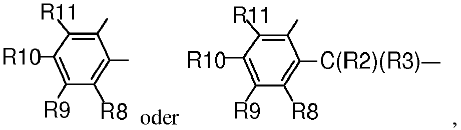
wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, - SC(=S)-, -OS(=O)₂₀-, -OS(=O)₂- oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15, - OC(=S)R16, -OS(=O)₂OR17, -OS(=O)₂R18 oder -NR19R20, oder L3 und L4 zusammen stehen für -L1-X-D-Y-L2-,
wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

2. Verfahren gemäß Anspruch 1, **dadurch gekennzeichnet, dass** der Gegenstand ein dreidimensionaler Gegenstand ist, aus einem Vorläufer erhalten wird und dass das Verfahren die Schritte umfasst:
I) Abscheiden von radikalisch vernetztem Aufbaumaterial auf einem Träger, so dass eine Lage eines mit dem Träger verbundenen Aufbaumaterials erhalten wird, welche einem ersten ausgewählten Querschnitt des Vorläufers entspricht;
II) Abscheiden von radikalisch vernetztem Aufbaumaterial auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden von radikalisch vernetztem Aufbaumaterial wenigstens in Schritt II) durch Belichten und/oder Bestrahlen eines ausgewählten Bereichs eines radikalisch vernetzbaren Aufbaumaterials, entsprechend dem jeweils ausgewählten Querschnitt des Vorläufers, erfolgt und wobei das radikalisch vernetzbare Aufbaumaterial eine Viskosität (23 °C, DIN EN ISO 2884-1) von ≥ 5 mPas bis ≤ 1000000 mPas aufweist,
wobei das radikalisch vernetzbare Aufbaumaterial eine härtbare Komponente umfasst, in der NCO-Gruppen und olefinische C=C-Doppelbindungen vorliegen
und dass nach Schritt III) weiterhin Schritt IV) durchgeführt wird:
IV) Erwärmen des nach Schritt III) erhaltenen Vorläufers auf eine Temperatur von ≥ 50 °C, so dass der Gegenstand erhalten wird.

3. Verfahren gemäß Anspruch 2, **dadurch gekennzeichnet, dass**:
- der Träger innerhalb eines Behälters angeordnet ist und vertikal in Schwerkraftrichtung absenkbar ist,
- der Behälter das radikalisch vernetzbare Aufbaumaterial in einer Menge enthält, welche ausreicht, um wenigstens den Träger und eine in vertikaler Richtung gesehenen obersten Oberfläche von auf dem Träger abgeschiedenem vernetztem Aufbaumaterial zu bedecken,
- vor jedem Schritt II) der Träger um eine vorbestimmte Strecke abgesenkt wird, so dass über der in vertikaler Richtung gesehen obersten Lage des vernetzten Aufbaumaterials sich eine Schicht des radikalisch vernetzbaren Aufbaumaterials bildet und
- in Schritt II) ein Energiestrahl den ausgewählten Bereich der Schicht des radikalisch vernetzbaren Aufbaumaterials, entsprechend dem jeweils ausgewählten Querschnitt des Vorläufers, belichtet und/oder bestrahlt.

4. Verfahren gemäß Anspruch 2, **dadurch gekennzeichnet, dass**:
- der Träger innerhalb eines Behälters angeordnet ist und vertikal entgegen der Schwerkraftrichtung anhebbar ist,
- der Behälter das radikalisch vernetzbare Aufbaumaterial bereitstellt,
- vor jedem Schritt II) der Träger um eine vorbestimmte Strecke angehoben wird, so dass unter der in vertikaler Richtung gesehen untersten Lage des vernetzten Aufbaumaterials sich eine Schicht des radikalisch vernetzbaren Aufbaumaterials bildet und
- in Schritt II) eine Mehrzahl von Energiestrahlen den ausgewählten Bereich der Schicht des radikalisch vernetzbaren Aufbaumaterials, entsprechend dem jeweils ausgewählten Querschnitt des Vorläufers, gleichzeitig belichtet und/oder bestrahlt.

5. Verfahren gemäß Anspruch 2, **dadurch gekennzeichnet, dass**:
- in Schritt II) das radikalisch vernetzbare Aufbaumaterial aus einem oder mehreren Druckköpfen, entsprechend dem jeweils ausgewählten Querschnitt des Vorläufers, aufgetragen wird und anschließend belichtet und/oder bestrahlt wird.

6. Verfahren gemäß Anspruch 1, **dadurch gekennzeichnet, dass** der Gegenstand eine Beschichtung ist und das Verfahren die Schritte umfasst:
- Auftragen des Aufbaumaterials auf ein Substrat
- Einwirken von Wärme und/oder UV-Strahlung auf das aufgetragene Aufbaumaterial, so dass im aufgetragenen Aufbaumaterial eine zumindest teilweise Vernetzung der radikalisch vernetzbaren Gruppen erfolgt
- Erwärmen des aufgetragenen Aufbaumaterials auf eine Temperatur von ≥ 50 °C, so dass im aufgetragenen Aufbaumaterial zumindest teilweise eine Reaktion zwischen NCO-Gruppen und Gruppen mit Zerewitinoff-aktiven H-Atomen erfolgt.

7. Verfahren gemäß Anspruch 1, **dadurch gekennzeichnet, dass** der Gegenstand eine Klebeverbindung ist und das Verfahren die Schritte umfasst:
- Auftragen des Aufbaumaterials auf ein erstes Substrat
- Kontaktieren des aufgetragenen Aufbaumaterials mit einem zweiten Substrat
- Einwirken von Wärme und/oder UV-Strahlung auf das aufgetragene Aufbaumaterial, so dass im aufgetragenen Aufbaumaterial eine zumindest teilweise Vernetzung der radikalisch vernetzbaren Gruppen erfolgt
- Erwärmen des aufgetragenen Aufbaumaterials auf eine Temperatur von ≥ 50 °C, so dass im aufgetragenen Aufbaumaterial zumindest teilweise eine Reaktion zwischen NCO-Gruppen und Gruppen mit Zerewitinoff-aktiven H-Atomen erfolgt.

8. Verfahren gemäß einem der Ansprüche 1 bis 7, **dadurch gekennzeichnet, dass** das Aufbaumaterial weiterhin einen Radikalstarter und/oder einen Isocyanat-Trimerisierungskatalysator umfasst.

9. Verfahren gemäß einem der Ansprüche 1 bis 8, **dadurch gekennzeichnet, dass** das Aufbaumaterial aus der Vermischung einer NCO-Gruppen enthaltenden Komponente sowie einer Gruppen mit Zerewitinoff-aktiven H-Atomen enthaltenden Komponente erhalten wird und die Vermischung ≤ 5 Minuten vor Beginn des Verfahrens erfolgt.

10. Verfahren gemäß einem der Ansprüche 1 bis 9, **dadurch gekennzeichnet, dass** in der Definition gemäß Anspruch 1 D -N(R1)- ist und R1 Wasserstoff oder ein Alkyl-, Aralkyl-, Alkaryl- oder Arylrest mit bis zu 20 C-Atomen ist oder der Rest 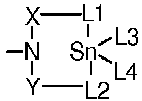 ist.

11. Verfahren gemäß einem der Ansprüche 1 bis 10, wobei in der Definition gemäß Anspruch 1 R1 Wasserstoff oder ein Methyl-, Ethyl-, Propyl-, Butyl-, Hexyl-, Octyl-, Ph-, oder CH₃Ph-Rest oder der Rest 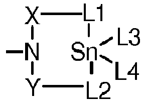 ist und wobei Propyl-, Butyl-, Hexyl-, und Octyl für alle isomeren Propyl-, Butyl-, Hexyl- sowie Octylreste stehen.

12. Verfahren gemäß einem der Ansprüche 1 bis 11, **dadurch gekennzeichnet, dass** in der Definition gemäß Anspruch 1 D* -O- ist.

13. Verfahren gemäß einem der Ansprüche 1 bis 12, **dadurch gekennzeichnet, dass** als zyklische Zinnverbindung eine oder mehrere der nachfolgenden Verbindungen eingesetzt werden:
4,12-Di-n-butyl-1,7,9,15-tetraoxa-4,12-diaza-8-stannaspiro[7.7]pentadecan,
4,12-Di-n-butyl-2,6,10,14-tetramethyl-1,7,9,15-tetraoxa-4,12-diaza-8-stannaspiro[7.7]pentadecan,
2,4,6,10,12,14-Hexamethyl-1,7,9,15-tetraoxa-4,12-diaza-8-stannaspiro[7.7]pentadecan,
4,12-Di-n-octyl-2,6,10,14-tetramethyl-1,7,9,15-tetraoxa-4,12-diaza-8-stannaspiro[7.7]pentadecan,
4,12-Di-n-octyl-1,7,9,15-tetraoxa-4,12-diaza-8-stannaspiro[7.7]pentadecan,
4,12-Dimethyl-1,7,9,15-tetraoxa-4,12-diaza-8-stannaspiro[7.7]pentadecan,
1,1-Dichloro-5-methyl-5-aza-2,8-dioxa-1-stannacyclooctan,
1,1-Diisopropyl-5-methyl-5-aza-2,8-dioxa-1-stannacyclooctan,
1,1-Dibenzoyl-3,3,7,7-tetramethyl 5-n-octyl-5-aza-2,8-dioxa-1-stannacyclooctan,
1,1-Dibenzoyl- 5-n-octyl-5-aza-2,8-dioxa-1-stannacyclooctan,
1,1-Bis(p-dodecylphenylsulfonyl)- 5-n-octyl-5-aza-2,8-dioxa-1-stannacyclooctan,
2-Benzoyloxy-6-octyl-4,8-dioxo-1,3,6,2-dioxazastannocan-2-ylbenzoat
oder Mischungen davon.

14. Gegenstand, erhalten durch ein Verfahren gemäß einem der Ansprüche 1 bis 13, **dadurch gekennzeichnet, dass** der Gegenstand in Aufbaurichtung seines Herstellungsverfahrens wenigstens abschnittsweise eine Höhe von ≥ 1 mm aufweist.

15. Verwendung von zyklischen Zinnverbindungen der Formel F-I, F-II und/oder F-III, wie in Anspruch 1, 10, 11, 12 oder 13 definiert, als thermisch latente Urethanisierungskatalysatoren in Aufbaumaterialien in additiven Fertigungsverfahren.
